# EUROPÄISCHE PATENTANMELDUNG

(11) **EP 1 522 550 A2**
(43) Veröffentlichungstag der Anmeldung: **13.04.2005**
(21) Anmeldenummer: 04405620.8
(22) Anmeldetag: 05.10.2004
(51) Int. Cl.: C08J 5/12, B29C 71/04, B29C 65/00, B29C 65/64

(54) **Verfahren zum fremdstofffreien Fugen zweier Werkstücke sowie nach diesem Verfahren gefugtes Werkstück**

(30) Priorität: 09.10.2003 CH 17172003
(71) Anmelder: Weidmann Plastics Technology AG, 8640 Rapperswil (CH)
(72) Erfinder: Gmür, Max, 9607 Mosnang (CH)
(74) Vertreter: Groner, Manfred

(57) **Zusammenfassung**

Bei einem Verfahren zum fremdstofffreien Fügen zweier Werkstücke (10, 16) zu einem in einer Fügefläche (24) gefügten Werkstück 25, welche Fügefläche (24) von zwei flächig aneinanderliegenden Oberflächen (13, 13') der beiden Werkstücke (10, 16) gebildet wird, wobei das erste Werkstück (16) aus einem Kunststoff und das zweite Werkstück (10) aus einem von Kunststoff abweichenden Werkstoff besteht, wird eine feste Verbindung auch bei unterschiedlichen thermischen Ausdehnungskoeffizienten der Werkstücke dadurch erreicht, dass in einem ersten Schritt zumindest die Oberfläche (13') des ersten Werkstücks (16) durch Bestrahlen mit einer energiereichen Strahlung aktiviert wird, dass in einem zweiten Schritt die Werkstücke (10, 16) mit den Oberflächen (13, 13') in Kontakt gebracht werden, und dass in einem dritten Schritt die beiden Werkstücke (10, 16) bei Raumtemperatur, insbesondere bei einer Temperatur zwischen 15°C und 30°C, zum Fügen mit den Oberflächen (13, 13') gegeneinander gepresst werden.

## Beschreibung

### TECHNISCHES GEBIET

Die vorliegende Erfindung bezieht sich auf das Gebiet des fremdstofffreien Fügens. Es betrifft ein Verfahren zum fremdstofffreien Fügen zweier Werkstücke gemäss dem Oberbegriff des Anspruchs 1 sowie ein nach diesem Verfahren gefügtes Werkstück.

### STAND DER TECHNIK

Fremdstofffreies Kunststoff-Hybrid-Fügen bezeichnet das Fügen von zwei Werkstücken aus Materialien mit unterschiedlichen chemischen und/oder physikalischen und/oder mechanischen und/oder optischen Eigenschaften, wobei ein Werkstück aus Kunststoff und das andere Werkstück aus einem von Kunststoff abweichenden Werkstoff (z.B. Keramik, Halbleiter (Silizium), Glas, Metall) ist. Die Verbindung der beiden Werkstücke erfolgt dabei ohne Fremdstoff (z.B. Klebstoff).

Fremdstofffreies Kunststoff-Hybrid-Fügen kann eingesetzt werden:
a) Zum Verbinden von zwei Werkstücken, wobei ein oder beide Werkstücke mikround/oder nanostrukturiert sein können und ein Werkstück aus Kunststoff und das andere Werkstück nicht aus Kunststoff ist. Das gefügte Werkstück beinhaltet u.a. folgende Element resp. Funktionen:
   - Sensoren und Aktuatoren;
   - chemische, physikalische, mechanische und optische Filter;
   - Ein- / Auskoppeln und Führen von Flüssigkeiten, Gasen und Licht;
   - Interface zur Umwelt;
   - Schutz vor schädlichen Umwelteinflüssen.
b) Dort, wo ein Kunststoff-Werkstück Bereiche mit erhöhten chemischen, physikalischen, mechanischen und optischen Anforderungen aufweist, welche vom Kunststoff nicht erfüllt werden können und deshalb an jener Stelle ein Werkstück aus einem anderen Nicht-Kunststoff-Material eingesetzt wird, welches die geforderten Eigenschaften erfüllt.

Dabei muss die Verbindung der beiden Werkstücke fremdstofffrei erfolgen, damit:
a) die Funktionen der Werkstücke nicht beeinträchtigt werden; und
b) keine Reaktion und/oder Kontamination stattfindet zwischen Fügezone und den flüssigen und gasförmigen Medien (z.B. chemische und biologische Substanzen), die bei der späteren Anwendung das gefügte Werkstück durchfliessen und dabei mit der Fügezone in Kontakt kommen.

Herkömmliche fremdstofffreie Kunststoff-Füge-Verfahren wie Ultraschall- oder Reibschweissen eignen sich nicht für mikro- und/oder nanostrukturierte Werkstücke, weil dabei die Mikro- und/oder Nanostrukturen verletzt oder zerstört werden, insbesondere wenn sich die Mikro- und/oder Nanostrukturen an der Oberfläche befinden.

Beim Laserschweissen ist es schwierig, die Wärme so zu dosieren, dass die Mikround/oder Nanostrukturen, welche sich auf der Oberfläche des Werkstücks, welche gleichzeitig die Fügefläche ist, befinden, durch die einwirkende Wärme nicht verletzt oder zerstört werden. Zudem ist Laserschweissen ein sequentielles Füge-Verfahren und deshalb für grossflächiges Fügen unwirtschaftlich.

Thermisches Fügen mit oder ohne Oberflächen-Aktivierung wird erfolgreich zum Fügen von mikro- und/oder nanostrukturierten Werkstücken eingesetzt, wobei beide Werkstücke aus demselben Kunststoff-Typ bestehen. Beim thermischen Fügen ohne Oberflächen-Aktivierung muss die Fügetemperatur über der Glasübergangstemperatur des Kunststoffes liegen damit sich die beiden Werkstücke verbinden. Beim thermischen Fügen mit Oberflächen-Aktivierung verbinden sich die beiden Werkstücke bereits unterhalb der Glasübergangstemperatur dauerhaft. Die Kunststoff-Oberfläche wird dabei im Plasma oder mit UV-Strahlung (Wellenlänge: 250-280 nm) aktiviert. Diese Aktivierung reicht aber nicht aus, dass sich die beiden Werkstücke bereits bei Raumtemperatur fest verbinden. Sowohl beim Fügen ohne Oberflächen-Aktivierung als auch beim Fügen mit Oberflächen-Aktivierung muss also Wärmeenergie zugeführt werden, damit eine dauerhafte Verbindung der beiden Werkstücke entsteht. Deshalb ist Fügen mit oder ohne Oberflächen-Aktivierung nicht geeignet zum Kunststoff-Hybrid-Fügen, weil wegen der unterschiedlichen Ausdehnungskoeffizienten der beiden zu fügenden Werkstücke beim Abkühlen grosse Verzugsspannungen entstehen, die schliesslich zum Bruch des Verbundes führen.

### DARSTELLUNG DER ERFINDUNG

Es ist Aufgabe der Erfindung, ein Verfahren zum fremdstofffreien Fügen anzugeben, welches sich für die Verbindung eines Werkstücks aus Kunststoff mit einem Werkstück aus einem von Kunststoff abweichenden Werkstoff (Kunststoff-Hybrid-Fügen) eignet, einfach in einen Produktionsprozess eingefügt werden kann, eine feste Verbindung ergibt und sich insbesondere, aber nicht ausschliesslich für Werkstücke mit Mikro- und/oder Nanostrukturen eignet.

Die Aufgabe wird durch die Gesamtheit der Merkmale des Anspruchs 1 gelöst. Der Kern der Erfindung besteht darin, die für das Fügen verwendete Oberfläche des Kunststoffwerkstücks vor dem eigentlichen Fügen durch Bestrahlen mit einer energiereichen Strahlung so zu aktivieren, dass sich durch ein Aufeinanderpressen der Oberflächen bereits bei Raumtemperatur, d.h., ohne Zufügen thermischer Energie, eine feste Verbindung zwischen den Werkstücken ergibt. Weil der Fügeprozess bei Raumtemperatur durchgeführt werden kann, entfallen alle mit unterschiedlichen thermischen Ausdehnungskoeffizienten verbundenen Probleme. Es ist daher insbesondere möglich, in den Werkstücken vorhandene Mikro- und/oder Nanostrukturen unbeschädigt in das gefügte Werkstück einzubringen.

Eine bevorzugte Ausgestaltung des erfindungsgemässen Verfahrens zeichnet sich dadurch aus, dass zum Bestrahlen der Oberfläche des ersten Werkstücks UV-Strahlung mit einer Wellenlänge kleiner 200 nm, insbesondere etwa 172 nm, verwendet wird. Bereits mit dieser Massnahme lassen sich ausgezeichnete Verbindungen erzielen.

Noch besser werden die Verbindungen, wenn gemäss einer weiteren Ausgestaltung vor dem zweiten Schritt auch die Oberfläche des zweiten Werkstücks mit einer energiereichen Strahlung, vorzugsweise einer UV-Strahlung mit einer Wellenlänge kleiner 200 nm, insbesondere etwa 172 nm, bestrahlt wird. Diese Bestrahlung führt auch zu einer gewissen Oberflächenaktivierung, dient aber vor allem der Reinigung der Oberfläche.

Eine weitere Verbesserung lässt sich erzielen, wenn die Oberfläche des zweiten Werkstücks zunächst, insbesondere durch einen nass- oder trockenchemischen Prozess, gereinigt wird.

Insbesondere hat es sich in der Praxis bewährt, wenn als UV-Strahlungsquelle für die UV-Strahlung eine Excimer-Lampe vom Typ Xeradex™20 der Firma Osram verwendet wird, wenn beim Bestrahlen der Oberflächen die Oberflächen nur wenige Millimeter von der Strahlungsquelle entfernt sind, und wenn die Bestrahlung über eine Zeitdauer von zwischen 10s und 600 s erfolgt.

Der Fügeschritt führt zu besonders guten Ergebnissen, wenn gemäss einer anderen Ausgestaltung der Erfindung die beiden Werkstücke im dritten Schritt in einer Fügepresse zwischen zwei planparallelen Pressplatten mit Druck beaufschlagt werden, wenn der Druck zwischen 300 und 600 bar beträgt und für eine Zeitdauer von zwischen 10 s und 600 s angelegt wird, und wenn das gefügte Werkstück nach Beendigung des dritten Schrittes eine längere Zeit, insbesondere mehrere Tage, bei Raumtemperatur ausgelagert wird.

Vorzugsweise besteht das erste Werkstück aus einem Cycloolefincopolymer (COC) oder Polymethylmethacrylat (PMMA), und das zweite Werkstück aus Silizium oder Glas.

Damit Verunreinigungen in den kritischen Phasen des Prozesses sicher vermieden werden, ist es von Vorteil, wenn die Bestrahlung des Werkstückes bzw. der Werkstücke in einem Reinraum erfolgt, und wenn der zweite Schritt in einem Reinraum durchgeführt wird.

Das erfindungsgemässe gefügte Werkstück, bei welchem ein erstes Werkstück aus einem Kunststoff und ein zweites Werkstück aus einem von Kunststoff abweichenden Material in einer Fügefläche miteinander fremdstofffrei verbunden sind, ist dadurch gekennzeichnet, dass zum Fügen ein Verfahren nach der Erfindung verwendet worden ist.

Insbesondere zeichnet sich das Werkstück dadurch aus, dass in dem Werkstück Mikround/oder Nanostrukturen ausgebildet sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer schematischen Darstellung die vorgängige nass- oder trockenchemische Reinigung des nicht aus Kunststoff bestehenden, im Schnitt dargestellten zweiten Werkstücks;
- Fig. 2: die anschliessende Oberflächenreinigung und -aktivierung des zweiten Werkstücks durch kurzwellige (172 nm) UV-Bestrahlung;
- Fig. 3: die Oberflächenaktivierung des im Schnitt dargestellten ersten, aus Kunststoff bestehenden Werkstücks durch kurzwellige (172 nm) UV-Bestrahlung;
- Fig. 4: das Aufeinanderlegen der beiden Werkstücke, wobei die bestrahlten Oberflächen aneinandergrenzen;
- Fig. 5: den in einer Fügepresse unter Druck und bei Raumtemperatur vorgenommenen Fügeschritt; und
- Fig. 6: in einer Schnittdarstellung das fertige gefügte Werkstück mit seinen Mikro- und/oder Nanostrukturen.

### WEGE ZUR AUSFÜHRUNG DER ERFINDUNG

Beim neu entwickelten erfindungsgemässen Verfahren zum fremdstofffreien Kunststoff-Hybrid-Fügen bei Raumtemperatur wird zuerst das nicht aus Kunststoff bestehende Werkstück nass- oder trockenchemisch gereinigt, um die Oberfläche von organischen und anorganischen Rückständen zu befreien.

Anschliessend werden die für das Fügen wichtigen Oberflächen der beiden Werkstücke mit UV-Strahlung der Wellenlänge kleiner 200 nm bestrahlt. Je kleiner die Wellenlänge der UV-Strahlung ist, desto mehr Energie hat sie. Bei Wellenlängen kleiner 200 nm ist die UV-Strahlung so energiereich, dass sie Molekül-Ketten auf der Kunststoff-Oberfläche aufbrechen kann und so freie Bindungen entstehen. Zudem bildet sich in der Umgebung der UV-Strahlung atomarer Sauerstoff (O) und Ozon (O₃). Die Sauerstoff-Radikale und das Ozon sind sehr reaktiv und tragen ebenfalls zur Aktivierung der Kunststoff-Oberfläche bei. Nach der UV-Bestrahlung ist die Oberflächen-Energie der Kunststoff-Werkstücke deutlich erhöht:
Kunststoff Oberflächen-Energie ohne Aktivierung: 20 - 40 mN/m
Kunststoff Oberflächen-Energie mit UV-Aktivierung: 60 - 72 mN/m (72 mN/m = Wasserbenetzung)

Die UV-Bestrahlung des nicht aus Kunststoff bestehenden Werkstücks dient weniger der Oberflächenaktivierung, sondern vielmehr der Reinigung der kritischen Oberflächen. Grundsätzlich kann auch ohne UV-Bestrahlung des nicht aus Kunststoff bestehenden Werkstücks ein fester Verbund mit dem Kunststoff-Werkstück hergestellt werden.

Anschliessend an die UV-Bestrahlung werden die beiden Werkstücke aufeinandergelegt, wobei sich die beiden aktivierten bzw. gereinigten Oberflächen berühren. Noch sind die beiden Oberflächen aber zu weit voneinander entfernt, um miteinander reagieren zu können. Durch Druckbeaufschlagung erreicht man, dass sich die beiden Oberflächen nahe genug kommen, um miteinander reagieren zu können. Der für eine Reaktion notwendige Mindestdruck ist abhängig vom Kunststofftyp und von der Planität der Oberflächen der beiden Werkstücke. Der Maximaldruck ist dann erreicht, wenn der Kunststoff plastisch verformt wird. Die Druckbeaufschlagung kann einige Sekunden bis einige Minuten dauern. Anschliessend an das Fügen wird die Druckpresse (Fügepresse) entlastet und das gefügte Werkstück entnommen. Die beiden gefügten Werkstücke lassen sich nun nur noch mit Krafteinwirkung trennen. Dabei tritt Weissbruch auf, was darauf hinweist, dass der Bruch innerhalb des Kunststoffs erfolgt ist und nicht am Interface zwischen den beiden Werkstücken. Durch mehrtägiges Auslagern bei Raumtemperatur wird die Festigkeit des Verbundes noch erhöht.

Der Fügeprozess findet bei Raumtemperatur statt. Damit spielen Unterschiede beim Temperaturausdehnungskoeffizienten der beiden Werkstücke keine Rolle. Nach dem Auslagern des gefügten Werkstückes ist der Verbund so stark, dass er Temperaturerhöhungen auf mindestens 60°C aushält, ohne dass beim anschliessenden Abkühlen eine Delamination erfolgt.

Bisher wurde das neue Verfahren zum fremdstofffreien Kunststoff-Hybrid-Fügen bei folgende Fügepaarungen erfolgreich eingesetzt:
- Silizium / COC (Cycloolefincopolymer),
- Silizium / PMMA (Polymethylmethacrylat, Plexiglas),
- Glas / COC, und
- Glas / PMMA.

### Typische Fügeparameter sind:

UV-Bestrahlung: 10s - 600s je nach Abstand zur UV-Strahlungs-Quelle (einige Millimeter);
Druckbeaufschlagung: 300 - 600 bar für 10s - 600s;
für die UV-Bestrahlung wurde eine Osram XERADEX™20 Excimer Lampe verwendet (Xenon-Füllung; Wellenlänge: 172 nm).

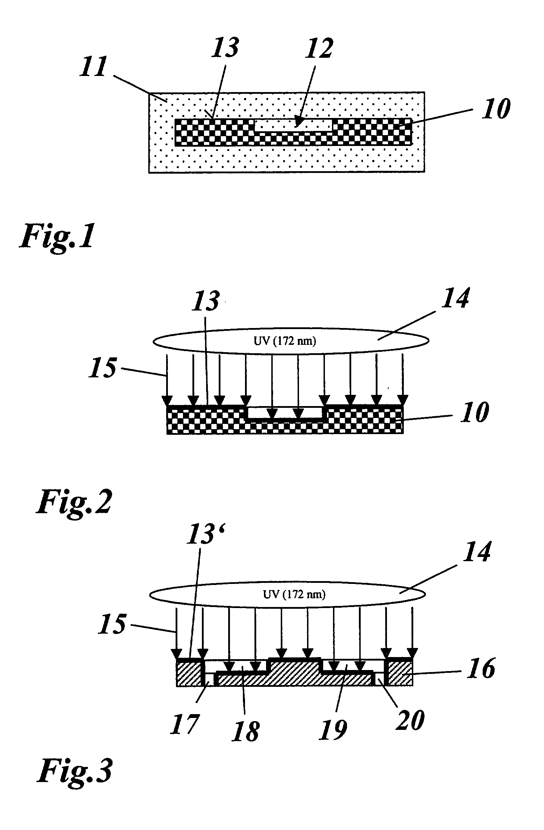

Der Prozessablauf kann noch einmal im Zusammenhang mit Fig. 1 bis 5 verdeutlicht werden:

Gemäss Fig. 1 wird das zweite, nicht aus Kunststoff bestehende Werkstück 10, das beispielsweise einen Mikrokanal 12 als Mikrostruktur aufweist, gereinigt, indem organische und anorganische Rückständen auf der Oberfläche 13 mittels eines nassund/oder trockenchemischen Reinigungsmittels 11 und -verfahrens entfernt werden.

Fig. 2 und 3 zeigen die Bestrahlung der Oberflächen 13 und 13' des zweiten und des ersten, aus Kunststoff bestehenden Werkstückes 10 bzw. 16 mit UV-Strahlung 15 der Wellenlänge kleiner 200 nm (172 nm), die aus einer UV-Quelle 14 stammt. Dabei wird die Kunststoff-Oberfläche 13' des ersten Werkstücks 16, das ebenfalls Mikrokanäle 18, 19 und Durchgangslöcher 17, 20 als Mikrostrukturen aufweist, aktiviert (die aktivierten Oberflächen sind in den Fig. 2 bis 5 mit dicken Strichen angedeutet). Die UV-Bestrahlung der Oberfläche 13 des zweiten Werkstücks 10 ist nicht zwingend. Um eine Verunreinigung der Oberflächen 13, 13' zu vermeiden sollte dieser Prozessschritt (Bestrahlung) im Reinraum erfolgen.

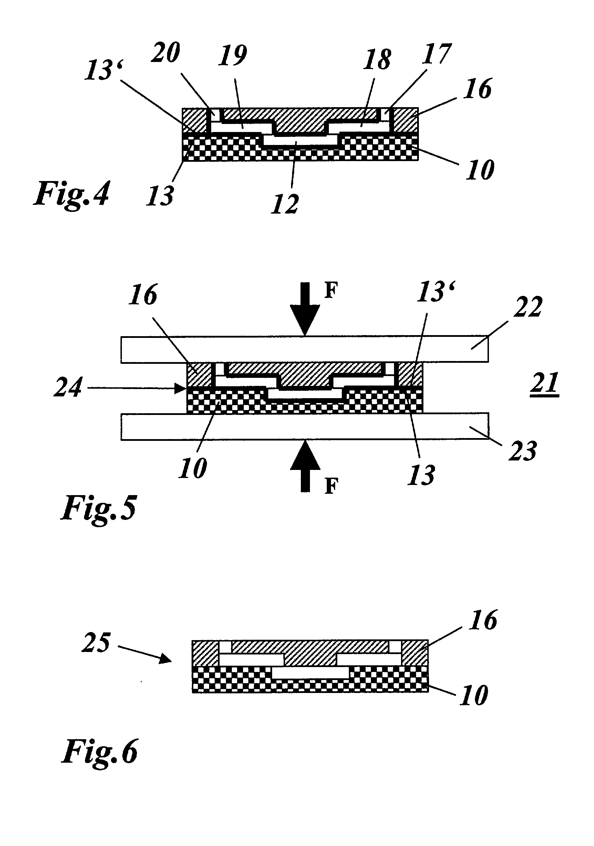

Gemäss Fig. 4 werden die beiden vorbereiteten (oberflächengereinigten und oberflächenaktivierten) Werkstücke 10 und 16 so aufeinander gelegt, dass sich die beiden aktivierten Oberflächen 13, 13' berühren. Um eine Verunreinigung der Oberflächen 13, 13' zu vermeiden sollte dieser Prozessschritt ebenfalls im Reinraum erfolgen.

Wie in Fig. 5 dargestellt, werden die beiden Fügepartner 10, 16 bei Raumtemperatur, insbesondere 15 - 30°C, in einer Fügepresse 21 gegeneinander gepresst, damit sich die aktivierten Oberflächen 13, 13' grossflächig berühren und miteinander reagieren. Damit die Druckbeaufschlagung durch die angelegte Kraft F gleichmässig über die gesamte Fügefläche 24 erfolgt müssen die beiden Pressplatten 22, 23 der Fügepresse 21 sehr planparallel sein.

Fig. 5 zeigt das gefügte Werkstück 25, das nach dem Entlasten der Fügepresse 21 aus der Fügepresse 21 entnommen worden ist. Durch anschliessendes Auslagern für einige Tage bei Raumtemperatur kann die Festigkeit der Verbindung noch erhöht werden.

Die Vorteile der neuen Kunststoff-Hybrid-Fügemethode sind die folgenden:
- Schonendes Fügen von einem Kunststoff-Werkstück mit einem Nicht-Kunststoff-Werkstück, wobei ein Werkstück oder beide Werkstücke mikro- und/oder nanostrukturiert sein kann bzw. können.
- Fügen von Werkstücken mit unterschiedlichen chemischen, physikalischen und mechanischen Eigenschaften insbesondere von Werkstücken mit unterschiedlichen Wärmeausdehnungskoeffizienten, da das Fügen bei Raumtemperatur erfolgt.
- Fügen ohne Fremdstoffe, was zur Folge hat, dass der apparative Aufwand beim Fügen klein ist und keine Gefahr besteht, dass die Fügezone mit dem (z.B. in einem Mikrokanal) zu führenden Medium, welches mit der Fügezone in Kontakt kommt, reagiert oder dieses kontaminiert.
- Wirtschaftliches Fügen grosser Flächen.
- Die Aktivierung der Kunststoff-Oberfläche mit UV-Bestrahlung ist sehr wirtschaftlich, weil die Zykluszeit kurz ist und die Aktivierung bei Umgebungsdruck erfolgt.
- Im Gegensatz zur Oberflächen-Aktivierung im Plasma entstehen bei der UV-Bestrahlung keine hochenergetischen Ionen, welche die Oberfläche des Kunststoff-Werkstückes beschädigen können.
- Die UV-Strahlungs-Quelle kann einfach in eine Produktionslinie integriert werden.

### BEZUGSZEICHENLISTE

- 10: Werkstück (aus einem von Kunststoff abweichenden Material, z.B. Keramik, Silizium, Glas, Metall etc.)
- 11: Reinigungsmittel (nass- oder trockenchemisch)
- 12: Mikrokanal
- 13,13': Oberfläche
- 14: UV-Strahlungsquelle (λ < 200nm)
- 15: UV-Strahlung
- 16: Werkstück (aus Kunststoff, z.B. COC oder PMMA)
- 17: Durchgangsloch
- 20: Durchgangsloch
- 18: Mikrokanal
- 19: Mikrokanal
- 21: Fügepresse
- 22: Pressplatte
- 23: Pressplatte
- 24: Fügefläche
- 25: gefügtes Werkstück
- F: Kraft

## Patentansprüche

1. Verfahren zum fremdstofffreien Fügen zweier Werkstücke (10, 16) zu einem in einer Fügefläche (24) gefügten Werkstück 25, welche Fügefläche (24) von zwei flächig aneinanderliegenden Oberflächen (13, 13') der beiden Werkstücke (10, 16) gebildet wird, wobei das erste Werkstück (16) aus einem Kunststoff und das zweite Werkstück (10) aus einem von Kunststoff abweichenden Werkstoff besteht, **dadurch gekennzeichnet, dass** in einem ersten Schritt zumindest die Oberfläche (13') des ersten Werkstücks (16) durch Bestrahlen mit einer energiereichen Strahlung (15) aktiviert wird, dass in einem zweiten Schritt die Werkstücke (10, 16) mit den Oberflächen (13, 13') in Kontakt gebracht werden, und dass in einem dritten Schritt die beiden Werkstücke (10, 16) bei Raumtemperatur, insbesondere bei einer Temperatur zwischen 15°C und 30°C, zum Fügen mit den Oberflächen (13, 13') gegeneinander gepresst werden.

2. Verfahren nach Anspruch 1, **dadurch gekennzeichnet, dass** zum Bestrahlen der Oberfläche (13') des ersten Werkstücks (16) UV-Strahlung (15) mit einer Wellenlänge kleiner 200 nm, insbesondere etwa 172 nm, verwendet wird.

3. Verfahren nach einem der Ansprüche 1 oder 2, **dadurch gekennzeichnet, dass** vor dem zweiten Schritt auch die Oberfläche (13) des zweiten Werkstücks (10) mit einer energiereichen Strahlung, vorzugsweise einer UV-Strahlung (15) mit einer Wellenlänge kleiner 200 nm, insbesondere etwa 172 nm, bestrahlt wird.

4. Verfahren nach einem der Ansprüche 1 bis 3, **dadurch gekennzeichnet, dass** die Oberfläche (13) des zweiten Werkstücks (10) zunächst, insbesondere durch einen nass- oder trockenchemischen Prozess, gereinigt wird.

5. Verfahren nach einem der Ansprüche 1 bis 4, **dadurch gekennzeichnet, dass** als UV-Strahlungsquelle (14) für die UV-Strahlung (15) eine Excimer-Lampe vom Typ Xeradex™20 der Firma Osram verwendet wird, dass beim Bestrahlen der Oberflächen (13, 13') die Oberflächen (13, 13') nur wenige Millimeter von der Strahlungsquelle (14) entfernt sind, und dass die Bestrahlung über eine Zeitdauer von zwischen 10s und 600 s erfolgt.

6. Verfahren nach einem der Ansprüche 1 bis 5, **dadurch gekennzeichnet, dass** die beiden Werkstücke (10, 16) im dritten Schritt in einer Fügepresse (21) zwischen zwei planparallelen Pressplatten (22, 23) mit Druck beaufschlagt werden.

7. Verfahren nach Anspruch 6, **dadurch gekennzeichnet, dass** der Druck zwischen 300 und 600 bar beträgt und für eine Zeitdauer von zwischen 10s und 600 s angelegt wird.

8. Verfahren nach einem der Ansprüche 1 bis 7, **dadurch gekennzeichnet, dass** das gefügte Werkstück (25) nach Beendigung des dritten Schrittes eine längere Zeit, insbesondere mehrere Tage, bei Raumtemperatur ausgelagert wird.

9. Verfahren nach einem der Ansprüche 1 bis 8, **dadurch gekennzeichnet, dass** das erste Werkstück (16) aus einem Cycloolefincopolymer (COC) oder Polymethylmethacrylat (PMMA) besteht, und dass das zweite Werkstück (10) aus Silizium oder Glas besteht.

10. Verfahren nach einem der Ansprüche 1 bis 9, **dadurch gekennzeichnet, dass** die Bestrahlung des Werkstückes (16) bzw. der Werkstücke (10, 16) in einem Reinraum erfolgt.

11. Verfahren nach einem der Ansprüche 1 bis 10, **dadurch gekennzeichnet, dass** der zweite Schritt in einem Reinraum durchgeführt wird.

12. Gefügtes Werkstück (25), bei welchem ein erstes Werkstück (16) aus einem Kunststoff und ein zweites Werkstück (10) aus einem von Kunststoff abweichenden Material in einer Fügefläche (24) miteinander fremdstofffrei verbunden sind, **dadurch gekennzeichnet, dass** zum Fügen ein Verfahren nach einem der Ansprüche 1 bis 11 verwendet worden ist.

13. Werkstück nach Anspruch 12, **dadurch gekennzeichnet, dass** in dem Werkstück (25) Mikro- und/oder Nanostrukturen (17 bis 20) ausgebildet sind.
